(19) **Europäisches Patentamt**

**European Patent Office**

**Office européen des brevets**

(11) Veröffentlichungsnummer: **0 084 379**
**B1**

(12) # EUROPÄISCHE PATENTSCHRIFT

(45) Veröffentlichungstag der Patentschrift:
22.05.85

(51) Int. Cl.⁴: **B 23 C 3/06**

(21) Anmeldenummer: **83100404.9**

(22) Anmeldetag: **18.01.83**

(54) **Kurbelwellen-Wirbelmaschine.**

(30) Priorität: **18.01.82 DE 3201320**

(43) Veröffentlichungstag der Anmeldung:
**27.07.83 Patentblatt 83/30**

(45) Bekanntmachung des Hinweises auf die Patenterteilung:
**22.05.85 Patentblatt 85/21**

(84) Benannte Vertragsstaaten:
**AT DE FR GB IT**

(56) Entgegenhaltungen:
**DE - A - 1 552 803**
**DE - A - 2 516 132**
**DE - B - 2 559 824**

**WERKSTATT UND BETRIEB, Band 105, Heft 9,**
**September 1972, Seiten 633-636, München, DE. H.G.**
**ROHS: "Wirbeln von Kurbelwellen"**
**WERKSTATT UND BETRIEB, Band 110, März 1977, Seite**
**150, München, DE. "Kurbelwellen-Fräsmaschine"**

(73) Patentinhaber: **Oerlikon-Boehringer GmbH, Stuttgarter**
**Strasse 50 Postfach 220, D-7320 Göppingen (DE)**

(72) Erfinder: **Berbalk, Hermann, Liebensteinstrasse 7,**
**D-7320 Göppingen (DE)**

(74) Vertreter: **Vogeser, Werner, Dipl.-Ing. et al,**
**Patentanwälte Hansmann & Vogeser**
**Albert-Rosshaupter-Strasse 65, D-8000 München 70 (DE)**

**Beschreibung**

Die Erfindung betrifft eine Kurbelwellen-Wirbelmaschine entsprechend dem Oberbegriff des Anspruchs 1 bzw. 13.

Es ist bei nach dem Doppelexzenterprinzip arbeitenden Wirbelmaschinen bekannt, bei der Bearbeitung der Hubzapfen von Kurbelwellen die Bearbeitung der Seitenwangen in einem Einstechvorgang durchzuführen (s. „Werkstatt und Betrieb", Bd. 105, Heft 9, September 1972, S. 633-636, und Bd. 110, März 1977, S. 150). Der Einstechvorgang beginnt ausgehend von einer konzentrischen Stellung des Wirbelkreisels bezüglich der Werkstückachse, d.h. einer Stellung, aus der der Wirbelkreisel zu jedem zu bearbeitenden Zapfen verfahren werden kann.

Beim Einstechvorgang dreht sich der Wirbelkreisel in üblicher Weise. Sein Mittelpunkt bewegt sich auf einer Kreisbahn von weniger als 360°. Die Grösse der Drehbewegung bzw. des Drehwinkels hängt von der Grösse des Durchmessers des Zapfens ab. Bei diesem Vorgang werden die Seitenwangen der zu bearbeitenden Zapfen zum grössten Teil bearbeitet.

Sobald der Zapfendurchmesser angefahren ist, d.h., der eingestellte Drehwinkel zurückgelegt ist, wird auf den Rundvorschub umgeschaltet und dann der Zapfen bis auf den Solldurchmesser bearbeitet. Der Einstechvorgang wird vom Innenexzenter gesteuert; während des Einstechvorganges ist der Aussenexzenter blockiert.

Nach dem Anfahren des Durchmessers des Zapfens wird der Innenexzenter mit dem Aussenexzenter gekuppelt, um den Rundvorschub durchzuführen, bei dem sich die Mitte des Wirbelkreisels um den zu bearbeitenden Hubzapfen bewegt.

Um zwischen dem Innen- und dem Aussenexzenter am Ende des Einstechvorgangs nach dem Anfahren des Zapfendurchmessers eine Kupplung zu erreichen, ist es bekannt, die Bewegung des Innenexzenters zu unterbrechen und die beiden Exzenter zu kuppeln. Bei diesem Bewegungsübergang erfolgt eine Reduzierung der Drehgeschwindigkeit des Innenexzenters bzw. ein Stillstand des Innenexzenters, so dass sich eine Stellung des Wirbelkreisels ergibt, in der die auftretenden Kräfte sehr gering werden. Dies bedeutet, dass die zuvor zwar nur gering durchgebogene Kurbelwelle zurückfedert und der bearbeitete Zapfen an dieser Stelle abgeflacht wird (DE-A Nr. 2516132). Hierzu kommt noch, dass infolge der Vorschubstillstandsphase mehrere Schneiden des Wirbelkreisels die Frässtelle überfahren. Auch hierdurch entsteht eine Abflachung des Zapfens. Derartige Abflachungen bedingen, dass ein grösseres Aufmass am Zapfen vorgesehen wird, um bei dem nachfolgenden Rundvorschubvorgang evtl. Abflachungen ausgleichen zu können.

Der Erfindung liegt die Aufgabe zugrunde, die Maschine der eingangs genannten Art so auszubilden, dass die Entstehung von Abflachungen beim Übergang vom Einstech- zum Rundvorschubvorgang vermieden wird.

Gelöst wird diese Aufgabe gemäss der Erfindung durch die im kennzeichnenden Teil des Anspruchs 1 bzw. 13 angegebenen Merkmale. Zweckmässige Ausgestaltungen der Erfindung ergeben sich aus den Unteransprüchen.

Dadurch, dass es beim Übergang vom Einstech- zum Rundvorschubvorgang zu keiner Vorschubstillstandsphase kommt, treten keine plötzlichen Kräfteänderungen auf. Auch überfahren nicht mehrere Schneiden des Wirbelkreisels eine Frässtelle. Bei gleichzeitiger Zeiteinsparung werden somit Abflachungen vermieden.

Die Vermeidung der Vorschubstillstandsphase kann auch gemäss dem kennzeichnenden Teil des Anspruchs 13 erfolgen, d.h., dass beim Einstechvorschub zunächst der eine Antrieb nur den einen Exzenter in Drehung versetzt und beim Übergang vom Einstech- auf den Rundvorschub der andere Antrieb zugeschaltet wird, also dann auch der andere Exzenter gedreht wird. Die Antriebe können z.B. von Gleichstrommotoren gebildet sein. Beide Exzenter mit zwei Antrieben zu drehen hat den Vorteil, dass es bei entsprechender Steuerung der Antriebe und damit der Exzenter auch möglich ist, unrunde Formen zu fräsen.

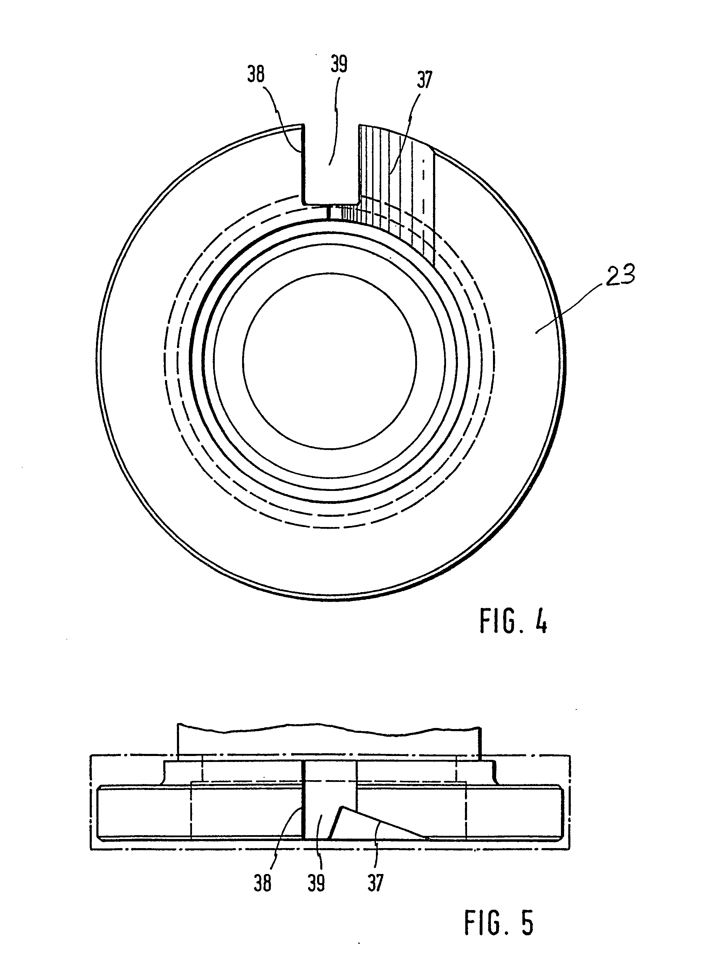

Die Erfindung wird nachstehend anhand der Fig. 1 bis 5 beispielsweise erläutert. Es zeigen:

Fig. 1 einen Axialschnitt der Antriebsgetriebe des Innen- und Aussenexzenters einer Wirbelmaschine,

Fig. 2 einen Schnitt längs der Linie II-II in Fig. 1,

Fig. 3 eine Aufsicht einer Wirbelmaschine im Bereich des Wirbelgerätes,

Fig. 4 eine Aufsicht des Mitnehmerteils, und

Fig. 5 eine Seitenansicht des Mitnehmerteils.

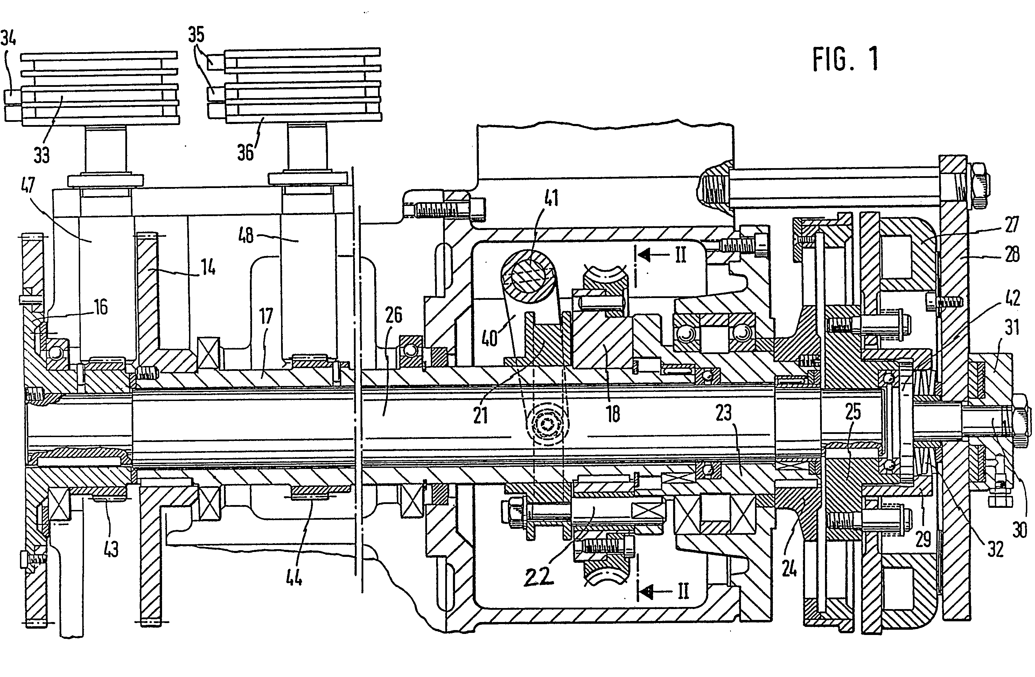

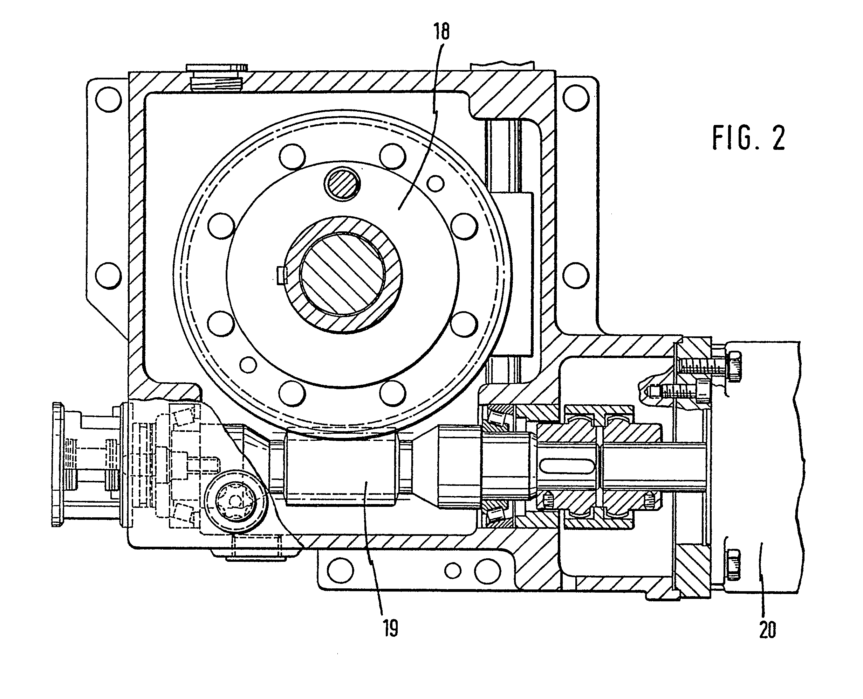

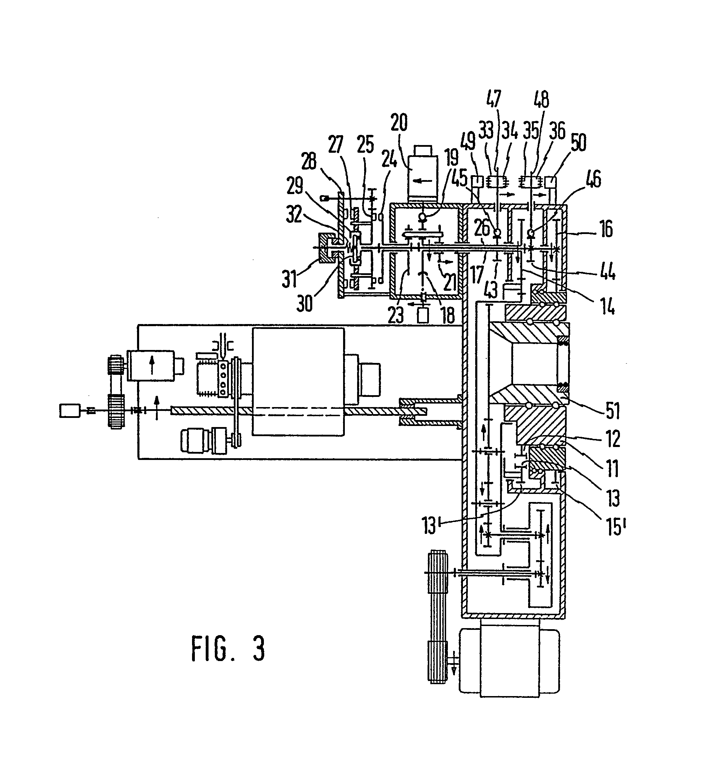

Wie die Fig. 1 und 3 zeigen, hat die Wirbelmaschine einen Wirbelkreisel 51', der in einem Innenexzenter 11 drehbar gelagert ist. Auf dem Innenexzenter 11 sitzt ein Zahnrad 12, das in die Innenverzahnung eines Zahnkranzes 13 eingreift. In die Aussenverzahnung 13' des Zahnkranzes 13 greift ein Zahnrad 14. Das Zahnrad 14 sitzt auf einer Hohlwelle 17, die über ein Schneckenrad 18, eine mit diesem in Eingriff stehende Schnecke 19 (Fig. 2) und einen Gleichstrommotor 20 angetrieben wird. Der Innenexzenter 11 ist in einem Aussenexzenter 15 gelagert, der ein Zahnrad 15' trägt, das mit einem Zahnrad 16 in Eingriff steht, das auf einer Welle 26 sitzt, die in der Hohlwelle 17 geführt ist.

Auf der Hohlwelle 17 ist axialverschiebbar eine Kupplungsmuffe 21 angeordnet. Die Kupplungsmuffe 21 sitzt drehbar in einer Gabel 40, die zur axialen Verstellung der Kupplungsmuffe mit einer Welle 41 verbunden ist. Die Kupplungsmuffe 21 trägt einen parallel zur Achsrichtung der Welle 17 und 26 vorstehenden Bolzen 22, der in der gezeigten Stellung durch das Schneckenrad 18 in ein auf der Welle 26 gelagertes Mitnehmerteil 23 greift. Mit dem Mitnehmerteil 23 ist ein auf der Welle 26 sitzendes Kronenrad 24 verbunden, das mit einem Gegenrad 25 zusammenwirkt. Das Gegenrad 25 ist mit einer Bremskupplung 27 verbunden, die eine mit dem Gegenrad 25 verbundene Übergreifmutter 29 hat, die über einen Bund 42 eines längsverschiebbaren Bolzens 30 greift, an dem ein Hydraulikzylinder 31 ausgebildet ist, der sich aussen an einem Gehäuse 28 abstützt. Zwischen dem Gehäuse 28 und dem Bund 42 ist eine Druckfeder 32 angeordnet. Die Druckfeder drückt die beiden Zahnräder 24 und 25 in Eingriff, wenn der Zylinder 31 nicht beaufschlagt wird. Wenn jedoch dem Zylinder 31 Druckmedium zugeführt wird, zieht der Bolzen 30 über den Bund 32 und die Übergreifmutter 29 die beiden Zahnräder 24 und 25 auseinander.

Bei Beginn der Bearbeitung eines Zapfens nehmen die beiden Exzenter eine Lage ein, in der der Werkzeugmittelpunkt auf der Drehachse der Kurbelwelle liegt und eine Verstellung in Axialrichtung zu dem zu bearbeitenden Zapfen möglich ist.

Die relative Lage der beiden Exzenter bestimmt den Solldurchmesser des Zapfens, der am Ende des Einstechvorganges erreicht werden soll. Der Bolzen 22 der Kupplungsmuffe 21 ist aus dem Mitnehmerteil 23 gezogen und die beiden Kronenräder 24 und 25 stehen in Eingriff, so dass der Aussenexzenter festgehalten ist. Der Innenexzenter 11 und damit der Mittelpunkt des Wirbelkreisels 51 werden nun durch den Motor 20 so weit gedreht, bis der Wirbelkreisel mit seinen Schneiden den gewünschten Zapfendurchmesser erreicht hat, der, wie zuvor erwähnt, von der relativen Ausgangslage der beiden Exzenter abhängt. Bei diesem Vorgang werden die Seitenwangen des Zapfens teilweise bearbeitet.

Die eigentliche Bearbeitung des Zapfens erfolgt nun während eines Rundvorschubvorganges, derart, dass der Innenexzenter 11 fest mit dem Aussenexzenter 15 gekuppelt wird, wobei beide Exzenter eine Drehung von 360° durchführen. Der Übergang des Einstechvorganges zum Runddrehvorgang muss ohne Stillstandsphase und mit hoher Genauigkeit erfolgen. Dies geschieht folgendermassen:

Durch axiale Verstellung der Kupplungsmuffe 21 wird der Bolzen 22 gegen das Mitnehmerteil 23 geschoben, gleitet auf dessen Stirnfläche und wird über eine Schrägfläche 37 des Mitnehmerteils 23 gegen eine Anschlagfläche 38 geführt. Die Schrägfläche 37 bildet in der Stirnseite des Mitnehmerteils 23 eine Vertiefung. Sobald der Zapfen 22 an der Anschlagfläche 38 zur Anlage kommt, wird das Mitnehmerteil 23 in Drehung versetzt und treibt über eine Welle 26 den Aussenexzenter 15 an. Die axiale Verstellung der Kupplungsmuffe 21 ist derart, dass der Bolzen 22 in eine Öffnung 39 einrastet, die als Verlängerung zur Anschlagfläche 38 ausgebildet ist.

Die Steuerung der Kupplungsmuffe 21 erfolgt durch eine Nockentrommel 36, die über eine Welle 48 und Schraubenräder 46 und 44 von der Welle 17 gedreht wird. Die Nockentrommel 36 hat Nocken 35, die auch zur Festlegung der Ausgangslage des Innenexzenters 11 mit einem Anschlag 50 zusammenwirken.

Die Drehlage des Aussenexzenters 15 wird in ähnlicher Weise über Schraubenräder 43, 45, eine Welle 47 und eine Nockentrommel 33 mit Nocken 34 erfasst. Der Nockentrommel 33 ist ebenfalls ein Anschlag 49 zugeordnet.

Nach Beendigung der Bearbeitung eines Zapfens werden die beiden Exzenter wieder dadurch voneinander gelöst, dass der Zapfen 22 aus dem Mitnehmerteil 23 gelöst wird. Der Innenexzenter 11 wird dann über den Motor in seine Ausgangsstellung zurückgedreht.

Die relative Lage der beiden Exzenter kann dadurch eingestellt werden, dass die beiden Kronenräder 24 und 25 voneinander gelöst und das Stirnzahnrad 24 und damit der Innenexzenter 11 durch Verdrehen über das Mitnehmerteil 23, den Bolzen 22 und das Schneckengetriebe 18, 19 und den Motor 20 gedreht werden. Dabei wird das Kronenrad 25 von der Kupplung 27 festgehalten.

**Patentansprüche**

1. Kurbelwellen-Wirbelmaschine nach dem Doppelexzenterprinzip, bei der der Wirbelkreisel in einem Innenexzenter (11) und dieser in einem in einem Gehäuse drehbaren Aussenexzenter (15) geführt ist, wobei beide Exzenter in ihrer gegenseitigen Lage einstellbar sind, dadurch gekennzeichnet, dass bei angetriebenem Innenexzenter (11) und nicht angetriebenem Aussenexzenter (15) der Innenexzenter (11) mit dem Aussenexzenter (15) über eine zusammen mit dem Innenexzenter angetriebene Kupplungsmuffe (21) und ein mit dem Aussenexzenter (15) kuppelbares Mitnehmerteil (13) in Abhängigkeit von der Drehlage des Innen- und Aussenexzenters (11, 15) kuppelbar sind, und dass die Kupplungsmuffe (21) einen Zapfen (22) aufweist, der beim Kuppeln über eine am Mitnehmerteil (23) eine Vertiefung bildende Schrägfläche (37) gegen eine Anschlagfläche (38) gleitet.

2. Maschine nach Anspruch 1, dadurch gekennzeichnet, dass die Anschlagfläche (38) durch eine parallel zur Axialrichtung des Zapfens (22) verlaufende Öffnung (39) am Mitnehmerteil (23) verlängert ist, in die der Zapfen (22) einrastet.

3. Maschine nach einem der Ansprüche 1 oder 2, dadurch gekennzeichnet, dass der Innenexzenter (11) ein Zahnrad (12) aufweist, das in die Innenverzahnung eines Zahnkranzes (13) eingreift, in dessen Aussenverzahnung (13') ein Zahnrad (14) eingreift, das auf einer Hohlwelle (17) sitzt.

4. Maschine nach Anspruch 3, dadurch gekennzeichnet, dass die Kupplungsmuffe (21) auf der Hohlwelle (17) axialverschiebbar angeordnet ist.

5. Maschine nach Anspruch 4, dadurch gekennzeichnet, dass die Kupplungsmuffe (21) mittels einer Gabel (40) axialverstellbar ist, die durch eine Welle (41) betätigbar ist.

6. Maschine nach einem der Ansprüche 3 bis 5, dadurch gekennzeichnet, dass auf der Hohlwelle (17) ein Schneckenrad (18) sitzt, das mit einer Schnecke (19) in Eingriff steht, die von der Ausgangswelle eines Gleichstrommotors (20) antreibbar ist.

7. Maschine nach einem der Ansprüche 1 bis 6, dadurch gekennzeichnet, dass der Aussenexzenter (15) ein Zahnrad (15') aufweist, das mit einem Zahnrad (16) kämmt, das auf einer Welle (26) sitzt, die über Kronenräder (24) und (25) mit dem Mitnehmerteil (23) verbunden ist.

8. Maschine nach Anspruch 7, dadurch gekennzeichnet, dass das Kronenrad (24) auf der Welle (26) sitzt und mit dem Gegenrad (25) in Eingriff bringbar ist, das mit einer Bremskupplung (27) zusammenwirkt.

9. Maschine nach Anspruch 8, dadurch gekennzeichnet, dass das Gegenrad (25) eine Übergreifmutter (29) aufweist, die über einen Bund (42) eines längsverstellbaren Bolzens (30) greift, der über einen Hydraulikzylinder (31) bei Beaufschlagung das Gegenrad entgegen der Wirkung einer am Bund (42) angreifenden Druckfeder (32) löst.

10. Maschine nach einem der Ansprüche 8 oder 9, dadurch gekennzeichnet, dass die Welle (26), die dem Aussenexzenter (15) zugeordnet ist, in der Hohlwelle (17) geführt ist, die dem Innenexzenter (11) zugeordnet ist.

11. Maschine nach einem der Ansprüche 1 bis 10, gekennzeichnet durch Drehmelder zur Anzeige der Drehlage der Innen- und Aussenexzenter (11, 15).

12. Maschine nach Anspruch 11, dadurch gekennzeichnet, dass auf den Wellen (17, 26) der Exzenter (11, 15) Schraubenräder (43, 44) sitzen, die mit Schraubenrädern (45, 46) zusammenwirken, die über Wellen (47, 48) mit Nockentrommeln (33, 36) verbunden sind, die Schaltnocken (34, 35) aufweisen.

13. Kurbelwellen-Wirbelmaschine nach dem Doppelexzenterprinzip, bei der der Wirbelkreisel in einem Innenexzenter (11) und dieser in einem in einem Gehäuse drehbaren Aussenexzenter (15) geführt ist, wobei beide Exzenter in ihrer gegenseitigen Lage einstellbar sind, dadurch gekennzeichnet, dass jedem Exzenter ein Antrieb zugeordnet ist, von denen beim Einstechvorschub zunächst nur der eine wirksam ist und beim Übergang vom Einstech- in den Rundvorschub der andere Antrieb zuschaltbar ist.


**Claims**

1. Crankshaft-milling machine according to the double-eccentric principle, in which the milling head is guided in an internal eccentric (11) which is guided in an external eccentric (15) rotatable in a housing, in which both eccentrics are adjustable in their mutual position, characterized in that, when the internal eccentric (11) is driven and the external eccentric (15) is not driven, the internal eccentric (11) is couplable with the external eccentric (15) by means of a coupling sleeve (21) which is driven together with the internal eccentric and a driving part (23) couplable with the external eccentric (15) in dependence upon the rotational position of the internal and external eccentrics (11, 15), and that the coupling sleeve (21) has a spigot (22) which, upon coupling, slides against an impact surface (38) over an inclined surface (37) forming a recess on the driving part (23).

2. Machine according to Claim 1, characterized in that the impact surface (38) is extended by an opening (39) on the driving part (23) extending parallel to the axial direction of the spigot (22), in which opening the spigot (22) engages.

3. Machine according to either of Claims 1 or 2, characterized in that the internal eccentric (11) has a gear-wheel (12) which engages with the internal gear of a ring-gear (13), in the external gearing (13') of which engages a gear-wheel (14) mounted on a hollow shaft (17).

4. Machine according to Claim 3, characterized in that the coupling sleeve (21) is arranged to be adjustable axially on the hollow shaft (17).

5. Machine according to Claim 4, characterized in that the coupling sleeve (21) is axially adjustable by means of a fork (40) which is operable by a shaft (41).

6. Machine according to any of Claims 3 to 5, characterized in that a worm-wheel (18) is mounted on the hollow shaft (17) and engages with a worm (19) which is drivable by the output shaft of a direct current motor (20).

7. Machine according to any of Claims 1 to 6, characterized in that the external eccentric (15) has a gear-wheel (15') which meshes with a gear-wheel (16) which is mounted on a shaft (26) connected to the driving part (23) by crown-wheels (24) and (25).

8. Machine according to Claim 7, characterized in that the crown-wheel (24) is mounted on the shaft (26) and can be brought into engagement with the counter-wheel (25) which co-operates with a braking clutch (27).

9. Machine according to Claim 8, characterized in that the counter-wheel (25) has an overlapping nut (29) which by means of a collar (42) grips a longitudinally movable bolt (30) which, on actuation by way of a hydraulic cylinder (31), releases the counter-wheel against the action a compression spring (32) engaging on the collar (42).

10. Machine according to either of Claims 8 or 9, characterized in that the shaft (26) associated with the external eccentric (15) is guided in the hollow shaft (17) associated with the internal eccentric (11).

11. Machine according to any of Claims 1 to 10, characterized by function generators for indicating the rotational position of the internal and external eccentrics (11, 15).

12. Machine according to Claim 11, characterized in that worm-wheels (43, 44) are mounted on the shafts (17, 26) of the eccentrics (11, 15) and co-operate with worm-wheels (45, 46) which are connected by shafts (47, 48) with cam drums (33, 36) which have switching cams (34, 35).

13. Crankshaft-milling machine according to the double-eccentric principle, in which the milling head is guided in an internal eccentric (11) which is guided in an external eccentric (15) rotatable in a housing, in which both eccentrics are adjustable in their mutual position, characterized in that a drive is associated with each eccentric, only one of which is at first operative during insertion movement and, on changing from insertion to rotary movement, the other drive is operative.

## Revendications

1. Machine de fraisage interne pour vilebrequins suivant le principe de double excentrique, où la toupie de tourbillonnement est guidée à l'intérieur d'un excentrique intérieur (11) qui lui-même est guidé à l'intérieur d'un excentrique extérieur (15) pouvant tourner dans un bâti, et où les positions respectives des deux excentriques peuvent être réglées, caractérisée par le fait que, si l'excentrique intérieur (11) est entraîné et si l'excentrique extérieur (15) n'est pas entraîné, l'excentrique intérieur (11) et l'excentrique extérieur (15) peuvent être accouplés, en fonction du degré de rotation des excentriques intérieur et extérieur (11, 15), au moyen d'un manchon d'accouplement (21) entraîné avec l'excentrique intérieur et d'une pièce d'entraînement (13) qui peut être accouplée à l'excentrique extérieur (15), et par le fait que le manchon d'accouplement (21) est muni d'un ergot (22) qui, lors de l'accouplement, glisse le long d'un plan incliné (37) formant une gorge dans la pièce d'entraînement (23) et vient buter contre la face de butée (38).

2. Machine selon la revendication 1, caractérisée par le fait que la face de butée (38) est prolongée par une encoche (39) dans la pièce d'entraînement (23), encoche dans laquelle s'engage l'ergot (22) et qui est parallèle à l'axe de ce dernier.

3. Machine selon l'une des revendications 1 ou 2, caractérisée par le fait que l'excentrique intérieur (11) porte une roue dentée (12) qui s'engrène sur la denture intérieure d'une couronne (13) dont la denture extérieure (13') s'engrène sur une roue dentée (14) montée sur un arbre creux (17).

4. Machine selon la revendication 3, caractérisée par le fait que le manchon d'accouplement (21) est disposé sur l'arbre creux (17) de façon qu'il puisse être déplacé axialement.

5. Machine selon la revendication 4, caractérisée par le fait que le manchon d'accouplement (21) peut être déplacé axialement au moyen d'une fourchette (40) qui peut être commandée par un arbre (41).

6. Machine selon l'une des revendications 3 à 5, caractérisée par le fait que l'arbre creux (17) porte une roue tangente (18) qui s'engrène sur une vis sans fin (19) qui peut être entraînée par l'arbre de sortie d'un moteur (20) à courant continu.

7. Machine selon l'une des revendications 1 à 6, caractérisée par le fait que l'excentrique extérieur (15) est muni d'une roue dentée (15') qui s'engrène sur une roue dentée (16) située sur un arbre (26) relié à la pièce d'entraînement (23) par les roues de chant (24) et (25).

8. Machine selon la revendication 7, caractérisée par le fait que la roue de chant (24) est située sur l'arbre (26) et peut s'engager dans la roue de chant (25) qui lui est opposée et qui est conjuguée avec un frein (27).

9. Machine selon la revendication 8, caractérisée par le fait que la roue de chant (25) est munie d'un écrou (29) à épaulement, dont l'épaulement emboîte une collerette (42) d'un axe (30) mobile axialement qui, par l'intermédiaire d'un vérin hydraulique (31), et lorsque ce dernier est mis sous pression, désengage la roue (25) contre l'effet d'un ressort de pression (32) s'appuyant sur la collerette (42).

10. Machine selon l'une des revendications 8 ou 9, caractérisée par le fait que l'arbre (26), qui est lié à l'excentrique extérieur (15), est guidé dans l'arbre creux (17) qui est lié à l'excentrique intérieur (11).

11. Machine selon l'une des revendications 1 à 10, caractérisée par un capteur de rotation ayant pour fonction d'indiquer le degré de rotation des excentriques intérieur et extérieur (11, 15).

12. Machine selon la revendication 11, caractérisée par le fait que les arbres (17, 26) des excentriques (11, 15) portent des roues à denture hélicoïdale (43, 44) qui s'engrènent sur des roues à denture hélicoïdale (45, 46) reliées à des tambours à cames (33, 36) par l'intermédiaire des arbres (47, 48), les tambours étant munis de cames de commande (34, 35).

13. Machine de fraisage interne pour vilebrequins suivant le principe de double excentrique, où la toupie de tourbillonnement est guidée à l'intérieur d'un excentrique intérieur (11) qui lui-même est guidé à l'intérieur d'un excentrique extérieur (15) pouvant tourner dans un bâti, et où les positions respectives des deux excentriques peuvent être réglées, caractérisée par le fait que chaque excentrique est relié à un système moteur, d'abord un seul de ces systèmes moteurs fonctionnant pendant l'avance en plongée et le deuxième pouvant être enclenché lors du passage de l'avance en plongée à l'avance circulaire.

FIG. 1

0 084 379

FIG. 2

FIG. 3

FIG. 4

FIG. 5